# EUROPÄISCHE PATENTSCHRIFT

(11) **EP 4 081 739 B1**
(45) Veröffentlichungstag und Bekanntmachung des Hinweises auf die Patenterteilung: **20.08.2025**
(21) Anmeldenummer: 21708133.0
(22) Anmeldetag: 10.02.2021
(51) Int. Cl.: F24D 19/10, G06Q 10/06, G06Q 50/06, F24D 10/00, G05D 23/19

(54) **STEUERUNG EINES WÄRMENETZES**
CONTROLLING A HEAT NETWORK
COMMANDE DE RÉSEAU DE CHALEUR

(30) Priorität: 14.04.2020 DE 102020204682
(43) Veröffentlichungstag der Anmeldung: 02.11.2022
(73) Patentinhaber: Siemens Aktiengesellschaft, 80333 München (DE)
(72) Erfinder: SCHÄFER, Jochen, 90408 Nürnberg (DE); THIEM, Sebastian, 91413 Neustadt an der Aisch (DE)
(74) Vertreter: Siemens Patent Attorneys
(86) Internationale Anmeldenummer: PCT/EP2021/053168
(87) Internationale Veröffentlichungsnummer: WO 2021/209179

(56) Entgegenhaltungen:
- EP-A1- 2 354 677
- EP-A1- 3 091 294
- EP-A1- 3 518 369
- EP-A1- 3 767 770

## Beschreibung

Die Erfindung betrifft eine Steuerungsplattform gemäß Patentanspruch 1, ein Verfahren gemäß Patentanspruch 9 sowie ein Wärmeaustauschsystem gemäß Patentanspruch 11.

Energiesysteme, wie beispielsweise Gemeinden, Haushalte, Gebäude, Betriebe und/oder dergleichen können mit Nahwärme oder Fernwärme versorgt werden. Typischerweise erfolgt hierbei die Fern- oder Nahwärmelieferung über ein Wärmenetz einer bezüglich der Energiesysteme zentralen Wärmeerzeugungsanlage, das heißt über einen Fern- beziehungsweise Nahwärmeversoger. Beispielsweise ist ein regionales Stadtwerk ein solcher Fern- oder Nahwärmeversorger. Die zentrale Wärmeerzeugungsanlage umfasst typischerweise Gaskessel und/oder Blockheizkraftwerke zur Wärmeerzeugung beziehungsweise Wärmebereitstellung.

Das Wärmenetz, welches die erzeugte Wärme für die Energiesysteme bereitstellt, beziehungsweise auf diese verteilt, weist typischerweise einen Vorlauf mit einer Vorlauftemperatur und einen Rücklauf mit einer Rücklauftemperatur für ein Wärmeträgermedium auf. Hierbei zirkuliert das Wärmeträgermedium, typischerweise Wasser, innerhalb des Wärmenetzes, und ermöglicht die Übertragung der Wärme zwischen den Energiesystemen und der zentralen Wärmeerzeugungsanlage. Das Wärmenetz kann hierbei verschiedene Strukturen und Topologien aufweisen, beispielsweise eine Ringstruktur. Die Wärmeübertragung beziehungsweise der Wärmeaustausch zwischen dem Wärmenetz und den einzelnen Energiesystemen (Wärmeverbraucher und/oder Wärmeerzeuger) erfolgt typischerweise über einen jeweiligen Wärmetauscher. Hierbei weist jedes Energiesystem typischerweise ein energiesysteminternes Wärmenetz auf, das mit dem zentralen Wärmenetz der zentralen Wärmeerzeugungsanlage über den Wärmetauscher thermisch gekoppelt ist.

Nach dem Stand der Technik wird durch den Wärmeversoger eine festgelegte Übergabetemperatur des Vorlaufs garantiert. Jeder Anschlussteilnehmer des Wärmenetzes (Wärmeverbraucher und/oder Wärmeerzeuger) muss ebenfalls die Wärme auf eine festgelegte Rücklauftemperatur auskühlen. Dies erfolgt typischerweise mittels einer Regelung des Massenstromes.

Nach dem Stand der Technik muss während des Betriebes des Wärmenetzes die Vorlauftemperatur des Wärmenetzes konstant gehalten werden. Es wird lediglich zwischen Winter und Sommer unterschieden. Dadurch wird das Wärmenetz jedoch ganzjährig nicht mit der bestmöglichen thermischen Effizienz betrieben. Aus dem Dokument EP 3091294 A1 ist ein Verfahren und eine Vorrichtung zur Steuerung der Wärmeversorgung von Wärmeverbrauchern bekannt. Hierbei erfolgt die Steuerung mittels aktueller IST-Zustände der Wärmeverbraucher.

Die Schrift DE102017125282A1 offenbart ein Verfahren und eine Vorrichtung zur Steuerung eines Wärmenetzes mit mehreren Wärmeverbrauchern und mehreren Wärmeerzeugern.

Der vorliegenden Erfindung liegt die Aufgabe zugrunde, die thermische Effizienz eines Wärmenetzes zu verbessern.

Die Aufgabe wird durch eine Steuerungsplattform mit den Merkmalen des unabhängigen Patentanspruches 1, durch ein Verfahren mit den Merkmalen des unabhängigen Patentanspruches 9 sowie durch ein Wärmeaustauschsystem mit den Merkmalen des Anspruches 11 gelöst. In den abhängigen Patentansprüchen sind vorteilhafte Ausgestaltungen und Weiterbildungen der Erfindung angegeben.

Die erfindungsgemäße Steuerungsplattform zur Steuerung eines Wärmenetzes, insbesondere eines Nahwärmenetzes und/oder Fernwärmenetzes, wobei mehrere Wärmeverbraucher und Wärmeerzeuger mit dem Wärmenetz zum Wärmeaustausch gekoppelt sind, ist dazu ausgebildet, von
- jedem Wärmeverbraucher eine Information über eine innerhalb eines Zeitbereiches minimal erforderliche lokale Vorlauftemperatur des Wärmeverbrauchers zu empfangen;
- jedem Wärmeerzeuger eine Information über eine innerhalb eines Zeitbereiches maximal bereitstellbare lokale Vorlauftemperatur des Wärmeerzeugers zu empfangen; und
- in Abhängigkeit der empfangenen Informationen bezüglich der lokalen Vorlauftemperaturen eine globale Vorlauftemperatur und/oder globale Rücklauftemperatur des Wärmenetzes einzustellen.

Der Begriff des Steuerns umfasst vorliegend ein Regeln. Somit ist die erfindungsgemäße Steuerungsplattform ebenfalls als Regelungsplattform ausgebildet.

Gemäß der vorliegenden Erfindung bildet die Steuerungsplattform eine zentrale Koordinierungsplattform für das Wärmenetz, insbesondere für ein Fernwärmenetz und/oder Nahwärmenetz aus. Hierbei wird die durch das Wärmenetz auf die Wärmeverbraucher übertragende Wärme bevorzugt durch eine zentrale Wärmeerzeugungsanlage, beispielsweise ein Blockheizkraftwerk, erzeugt beziehungsweise bereitgestellt. Die Steuerungsplattform kann Bestandteil der zentralen Wärmeerzeugungsanlage sein. Besonders bevorzugt ist die erfindungsgemäße Steuerungsplattform unabhängig von der zentralen Wärmeerzeugungsanlage und bildet einen lokalen Wärmemarkt im Sinne eines lokalen Energiemarktes aus, insbesondere einen lokalen Fernwärmemarkt und/oder lokalen Nahwärmemarkt. Dadurch wird vorteilhafterweise ein lokaler Wärmeaustausch, der Wärmeerzeugung und Wärmeverbrauch verbessert in Übereinstimmung bringt, ausgebildet. Die erfindungsgemäße Steuerungsplattform ist hierbei ein wesentliches Element eines solchen lokalen Wärmemarktes. Mit anderen Worten umfasst ein lokaler Energiemarkt im Sinne der vorliegenden Erfindung eine Steuerungsplattform gemäß der vorliegenden Erfindung und/oder einer ihrer Ausgestaltungen.

Eine lokaler Energiemarkt für elektrische Energie ist beispielsweise aus dem Dokument EP 3518369 A1 bekannt.

Mittels der erfindungsgemäßen Steuerungsplattform werden die Teilnehmer (Wärmeverbraucher und/oder Wärmeerzeuger) des Wärmenetzes zentral koordiniert. Hierzu weisen die Teilnehmer, das heißt die Wärmeverbraucher und/oder Wärmeerzeuger, bevorzugt eine Vorrichtung zum Datenaustausch mit der Steuerungsplattform, das heißt eine IT-technische Anbindung an die Steuerungsplattform auf. Hierbei ermöglicht es die erfindungsgemäße Steuerungsplattform, aufgrund der erfindungsgemäßen Steuerung, die diese bereitstellt, insbesondere die Wärmeerzeuger in das Wärmenetz einzubinden. Dadurch kann vorteilhafterweise lokale Wärme in das Wärmenetz eingespeist werden. Weiterhin können Wärmespeicher eingebunden werden, die als Wärmeverbraucher angesehen werden, jedoch analog zu Wärmeerzeuger ebenfalls Wärme bereitstellen können.

Gemäß der vorliegenden Erfindung ist die Steuerungsplattform dazu ausgebildet, basierend, das heißt in Abhängigkeit der an die Steuerungsplattform übermittelten und durch diese empfangenen lokalen Vorlauftemperaturen das Wärmenetz zu steuern. Insbesondere wird hierzu bevorzugt die globale Vorlauftemperatur, das heißt die Vorlauftemperatur des Wärmenetzes eingestellt. Mit anderen Worten werden erfindungsgemäß bei der Steuerung durch die Steuerungsplattform die Vorlauftemperaturen der Wärmeverbraucher beziehungsweise der Wärmeerzeuger mitberücksichtigt. Dadurch kann vorteilhafterweise die globale Vorlauftemperatur bedarfsgerecht reduziert oder angehoben werden, wodurch die thermische Effizienz des Wärmenetzes, das heißt die Effizienz der Wärmebereitstellung erhöht wird. Insbesondere werden durch die erfindungsgemäße bedarfsgerechte Einstellung der globalen Vorlauftemperatur die Wärmeverluste des Wärmenetzes gegenüber seiner Umgebung verringert, da die globale Vorlauftemperatur reduzierbar ist und sich somit gegenüber der Umgebung des Wärmenetzes eine kleinere Temperaturdifferenz einstellt.

Hierbei incentiviert die erfindungsgemäße Steuerungsplattform einerseits einen Verzicht auf nicht erforderlich hohe Vorlauftemperaturen. Andererseits wird ebenfalls eine zeitliche Verschiebung erforderlicher Hochtemperaturwärmelasten auf Wärmeverbrauchsseite unter einer Verwendung von thermischen Energiespeichern, insbesondere von Wärmespeichern, gefördert, um eine möglichst lange zeitlich begrenzte Absenkung der globalen Vorlauftemperatur zu ermöglichen. Beispielsweise wird zunächst mittels eines Gasbrenners Wärme mit 100 Grad Celsius durch einen der Wärmeerzeuger erzeugt. Ein Wärmeverbraucher, der eine Hochtemperaturwärmepumpe und einen Wärmespeicher aufweist, speichert die durch den Gasbrenner erzeugte Wärme für eine spätere Verwendung.

Gemäß dem erfindungsgemäßen Verfahren zur Steuerung eines Wärmenetzes, insbesondere eines Nahwärmenetzes und/oder Fernwärmenetzes, mittels einer Steuerungsplattform, wobei mehrere Wärmeverbraucher und Wärmeerzeuger mit dem Wärmenetz zum Wärmeaustausch gekoppelt sind, wird durch die Steuerungsplattform, von
- jedem Wärmeverbraucher eine Information über eine innerhalb eines Zeitbereiches minimal erforderliche lokale Vorlauftemperatur des Wärmeverbrauchers empfangen;
- jedem Wärmeerzeuger eine Information über eine innerhalb eines Zeitbereiches maximal bereitstellbare lokale Vorlauftemperatur des Wärmeerzeugers empfangen; und
- in Abhängigkeit der empfangenen Informationen bezüglich der lokalen Vorlauftemperaturen eine globale Vorlauftemperatur und/oder globale Rücklauftemperatur des Wärmenetzes (10) eingestellt.

Es ergeben sich zur erfindungsgemäßen Steuerungsplattform gleichartige und gleichwertige Vorteile und Ausgestaltungen.

Das erfindungsgemäße Wärmeaustauschsystem umfasst eine Steuerungsplattform nach Anspruch 1 und ein Wärmenetz, und die Steuerungsplattform ist zur Steuerung des Wärmenetzes ausgebildet, wobei mehrere Wärmeverbraucher und Wärmeerzeuger mit dem Wärmenetz zum Wärmeaustausch gekoppelt sind.

Es ergeben sich zur erfindungsgemäßen Steuerungsplattform gleichartige und gleichwertige Vorteile und Ausgestaltungen.

Erfindungsgemäß ist die Steuerungsplattform weiterhin dazu ausgebildet, eine bezüglich des Wärmenetzes globale Vorlauftemperatur und/oder globale Rücklauftemperatur des Wärmenetzes in Abhängigkeit der empfangenen Informationen über die lokalen Vorlauftemperaturen einzustellen.

Mit anderen Worten wird basierend auf den lokalen Vorlauftemperaturen der einzelnen Wärmeverbraucher und/oder Wärmeerzeuger die Vorlauftemperatur des Wärmenetzes (globale Vorlauftemperatur) und/oder die Rücklauftemperatur des Wärmenetzes (globale Rücklauftemperatur) angehoben oder abgesenkt. Hierbei ist es von Vorteil, die globale Vorlauftemperatur soweit wie möglich zu senken und dennoch den Wärmebedarf der Wärmeverbraucher ausreichend zu decken. Mit anderen Worten ist eine möglichst niedrige Vorlauftemperatur des Wärmenetzes vorteilhaft, da dadurch die Wärme effizienter bereitgestellt werden kann. Beispielswiese ist eine Wärmeerzeugung mittels einer Hochtemperaturwärmepumpe bei niedrigen Vorlauftemperaturen effizienter, da ihr Leistungskoeffizient höher ist. Bei einem Gaskessel ist der Brennstoffnutzungsgrad höher. Die vorliegende Erfindung beziehungsweise eine ihrer Ausgestaltungen ermöglicht eine solche vorteilhaft niedrige globale Vorlauftemperatur, insbesondere auf Seite der Wärmeverbraucher, bei gleichzeitiger Deckung des Wärmebedarfs der Wärmeverbraucher. Dies wird dadurch ermöglicht, dass die Steuerungsplattform in Kenntnis der lokalen Vorlauftemperaturen, das heißt der Vorlauftemperaturen der Wärmeverbraucher ist.

Somit kann eine vorteilhafte ganzheitliche Steuerung des Wärmenetzes bereitgestellt werden, die die lokalen Vorlauftemperaturen berücksichtigt und gleichzeitig eine möglichst weitgehende Absenkung der Vorlauftemperatur des Wärmenetzes (globale Vorlauftemperatur) ermöglicht. Mit anderen Worten können die mehreren Teilnehmer, insbesondere eines Fernwärmenetzes und/oder Nahwärmenetzes, zentral durch die Steuerungsplattform koordiniert werden.

In einer vorteilhaften Weiterbildung der Erfindung ist die Steuerungsplattform dazu ausgebildet, von jedem Wärmeverbraucher und/oder Wärmeerzeuger eine innerhalb des Zeitbereiches maximal verbrauchbare beziehungsweise maximal bereitstellbare Wärmeleistung zu empfangen, wobei die empfangenen maximalen Wärmeleistungen bei der Steuerung des Wärmenetzes durch die Steuerungsplattform berücksichtigbar sind.

Mit anderen Worten teilen die Wärmeverbraucher der Steuerungsplattform ihren maximalen Wärmebedarf innerhalb des Zeitbereiches mit. Die Wärmeerzeuger Teilen der Steuerungsplattform ihre maximale bereitstellbare und/oder erzeugbare Wärmeleistung innerhalb des Zeitbereiches mit. Insbesondere erfolgt dies für einen zukünftigen Zeitbereich, beispielsweise für die nächste Stunde oder die nächsten 15 Minuten, und wiederholt sich in den genannten zeitlichen Abschnitten. Dadurch hat die Steuerungsplattform vorteilhafterweise Kenntnis über die zukünftig erforderlichen Wärmelasten (innerhalb des Zeitbereiches). Diese Informationen werden vorteilhafterweise bei der Steuerung, insbesondere beim Einstellen oder Festlegen der globalen Vorlauftemperatur, das heißt der Vorlauftemperatur des Wärmenetzes, durch die Steuerungsplattform berücksichtigt. Dadurch wird vorteilhafterweise die Steuerung weiter verbessert.

Gemäß einer vorteilhaften Ausgestaltung der Erfindung ist die Steuerungsplattform dazu ausgebildet, von jedem Wärmeverbraucher ein maximales Entgelt für einen Wärmeverbrauch innerhalb des Zeitbereiches zu empfangen, wobei die empfangenen maximalen Entgelte bei der Steuerung des Wärmenetzes durch die Steuerungsplattform berücksichtigbar sind.

Mit anderen Worten teilen die Wärmeverbraucher der Steuerungsplattform das maximale Entgelt mit, zu welchem sie bereit sind, Wärme (innerhalb des Zeitbereiches) aus dem Wärmenetz zu beziehen beziehungsweise zu verbrauchen. Die Steuerungsplattform berücksichtigt diese übermittelten und durch sie empfangenen und gegebenenfalls bearbeiteten Informationen bei ihrer Steuerung des Wärmenetzes. Insbesondere verknüpft sie hierbei für jeden Wärmeverbraucher seine übermittelte maximale Wärmeleistung mit seinem übermittelten zugehörigen maximalen Entgelt. Mit anderen Worten hat die Steuerungsplattform für den Zeitbereich und jeden Wärmeverbraucher Kenntnis über seine lokale Vorlauftemperatur, seine maximale Wärmeleistung sowie sein dafür maximales Entgelt. Dies kann als Angebot an die Steuerungsplattform im Sinne einer Wärmemarktplattform verstanden werden. Bei der Steuerung bringt die Steuerungsplattform hierbei die Wärmeleistungen mit den jeweiligen Entgelten (Vergütungskonditionen) in Übereinstimmung. Mit anderen Worten werden diese gematcht. Hierbei werden die lokalen Vorlauftemperaturen und ergänzend bestimmte Netzabschnitte des Wärmenetzes berücksichtigt. Für das Berücksichtigen von Netzabschnitten des Wärmenetzes ist wenigstens eine Modellierung des Wärmenetzes erforderlich.

Für die Wärmeerzeuger kann analog zu den obenstehend beschriebenen Wärmeverbraucher vorgegangen werden, wobei diese ein minimales Entgelt für die Bereitstellung ihrer Wärmeleistung übermitteln.

Mit anderen Worten ist die Steuerungsplattform vorteilhafterweise dazu ausgebildet, von jedem Wärmeerzeuger ein minimales Entgelt für eine Wärmebereitstellung innerhalb des Zeitbereiches zu empfangen, wobei die empfangenen minimalen Entgelte bei der Steuerung des Wärmenetzes durch die Steuerungsplattform berücksichtigbar sind.

Vorteile und Ausgestaltungen sind analog zu den Wärmeverbrauchern, wobei im Gegensatz zu den Wärmeverbrauchern die Wärmeerzeuger ein minimales Entgelt für ihre bereitzustellende Wärmelast an die Steuerungsplattform übermitteln.

In einer vorteilhaften Weiterbildung der Erfindung ist die Steuerungsplattform dazu ausgebildet, den Wert der globalen Vorlauftemperatur mittels einer mathematischen Optimierung zu berechnen, wobei wenigstens die empfangenen lokalen Vorlauftemperaturen durch die Steuerungsplattform bei der Optimierung berücksichtigbar sind.

Mit anderen Worten erfolgt die Steuerung des Wärmenetzes basierend oder mittels einer mathematischen Optimierung. Hierbei basiert die mathematische Optimierung auf einer Optimierungsgröße, die ebenfalls Zielfunktion genannt wird. Mittels der Optimierung werden Variablen der Optimierungsgröße, beispielsweise die einzelnen Wärmelasten, bestimmt, ermittelt und/oder berechnet, die einen maximalen oder minimalen Wert der Optimierungsgröße (Zielfunktionswert) ausbilden. Die Optimierungsgröße ist insbesondere eine technische Größe des Wärmenetzes, beispielsweise sein Wärmeumsatz, der maximiert werden soll, oder die globale Vorlauftemperatur, die minimiert werden soll. Hierbei wird der aktuelle Zustand des Wärmenetzes, der durch die lokalen Vorlauftemperaturen charakterisiert ist, bei der Optimierung berücksichtigt. Beispielsweise werden diese zur Parametrisierung der Zielfunktion verwendet.

Gemäß einer vorteilhaften Ausgestaltung der Erfindung ist die Steuerungsplattform dazu ausgebildet, die globale Vorlauftemperatur des Wärmenetzes im Bereich von 30 Grad Celsius bis 150 Grad Celsius einzustellen.

Dadurch wird vorteilhafterweise die Effizienz des Wärmenetzes verbessert, da vorteilhaft geringe Vorlauftemperaturen ermöglicht werden. Insbesondere wird der genannten vorteilhafte Temperaturbereich bei der Optimierung als Nebenbedingung berücksichtigt. Hierbei kann zwischen den Jahreszeiten unterschieden werden. Im Winter ist eine globale Vorlauftemperatur bis 150 Grad Celsius, insbesondere bis 130 Grad Celsius, besonders bevorzugt bis maximal 120 Grad Celsius vorteilhaft. Im Sommer ist eine globale Vorlauftemperatur im Bereich von 30 Grad Celsius bis 100 Grad Celsius, insbesondere im Bereich von 40 Grad Celsius bis 90 Grad Celsius, besonders bevorzugt im Bereich von 40 Grad Celsius bis 80 Grad Celsius vorteilhaft.

In einer vorteilhaften Weiterbildung der Erfindung ist die Steuerungsplattform dazu ausgebildet, eine Simulation des Betriebes des Wärmenetzes basierend auf technischen Kenndaten von Rohrleitungen des Wärmenetzes durchzuführen.

Dadurch wird vorteilhafterweise die Steuerung des Wärmenetzes durch die Steuerungsplattform weiter verbessert, insbesondere im Hinblick auf eine Berücksichtigung von Netzabschnitten des Wärmenetzes.

Besonders bevorzugt ist für die Berücksichtigung von Netzabschnitten des Wärmenetzes die Steuerungsplattform dazu ausgebildet, die Simulation basierend auf Verlustkoeffizienten und/oder maximalen Wärmeleistungen und/oder der Positionen der Wärmeverbraucher innerhalb des Wärmenetzes und/oder der Positionen der Wärmeerzeuger innerhalb des Wärmenetzes durchzuführen.

Vorteilhafterweise können dadurch Unterschiede in den Netzabschnitten des Wärmenetzes, insbesondere im Hinblick auf technische Kenndaten wie beispielsweise verschiedene Rohrdurchmesser, Verlustkoeffizienten und/oder Übertragungskapazitäten (maximale Wärmeleistungen) berücksichtigt werden. Dadurch wird die Steuerung des Wärmenetzes weiter verbessert.

Bevorzugt ist das Wärmenetz als Nahwärmenetz, Fernwärmenetz, Fernkältenetz und/oder Anergienetz ausgebildet.

Besonders bevorzugt ist das Wärmenetz ein Nahwärmenetz oder ein Fernwärmenetz. Das ist deshalb von Vorteil, da dadurch ein großer Anteil bereits bestehender Wärmenetze in ein Wärmeaustauschsystem gemäß der vorliegenden Erfindung und/oder einer ihrer Ausgestaltungen integriert werden kann.

Weiterhin umfasst das Wärmeaustauschsystem bevorzugt die Wärmeverbraucher und die Wärmeerzeuger.

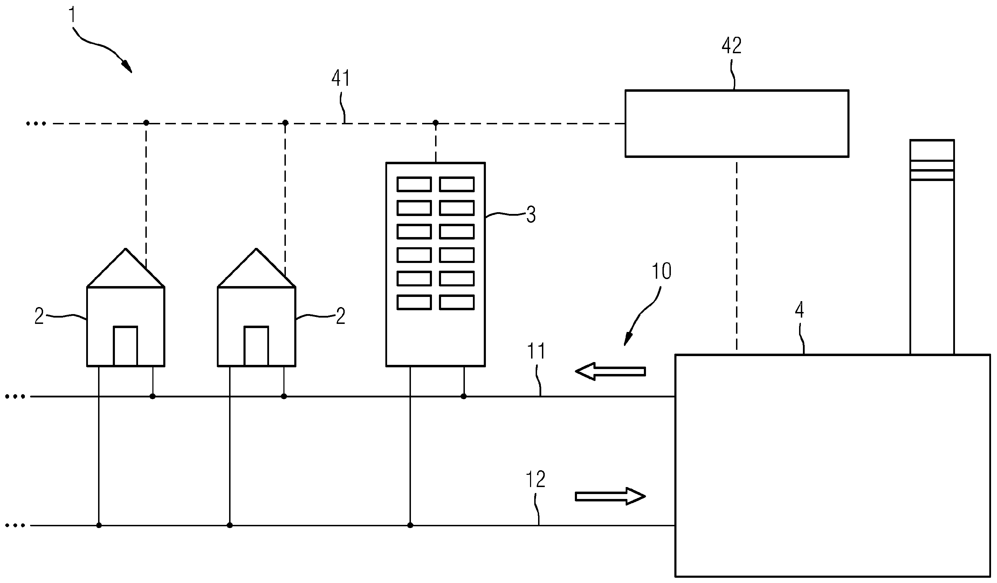

Weitere Vorteile, Merkmale und Einzelheiten der Erfindung ergeben sich aus den im Folgenden beschriebenen Ausführungsbeispielen sowie anhand der Zeichnung. Dabei zeigt die einzige Figur ein Wärmeaustauschsystem gemäß einer Ausgestaltung der vorliegenden Erfindung.

Gleichartige, gleichwertige oder gleichwirkende Elemente können in einer der Figuren oder in den Figuren mit denselben Bezugszeichen versehen sein.

Die Figur zeigt ein Wärmeaustauschsystem 1 gemäß einer Ausgestaltung der vorliegenden Erfindung.

Das Wärmeaustauschsystem 1 umfasst wenigstens eine Steuerungsplattform 42 gemäß der vorliegenden Erfindung und/oder einer ihrer Ausgestaltungen sowie wenigstens ein Wärmenetz 10. Mehrere Wärmenetze 10 können vorgesehen sein.

Das Wärmenetz 10 ist dazu vorgesehen beziehungsweise ausgebildet, einen oder mehrere Wärmeverbraucher 2 und einen oder mehrere Wärmerzeuger 3 thermisch für einen Wärmeaustausch zu koppeln. Weiterhin ist zur grundsätzlichen Wärmebereitstellung beziehungsweise Wärmeerzeugung eine bezüglich des Wärmenetzes 10 zentrale Wärmeerzeugungsanlage 4 vorgesehen. Somit können die Wärmeverbraucher 2 über das Wärmenetz 10 von der Wärmeerzeugungsanlage 4 erzeugte und/oder durch die Wärmeerzeuger 3 eingespeiste Wärme beziehen. Weitere Wärmeverbraucher 2, insbesondere Wärmespeicher, beziehungsweise Wärmeerzeuger 3 und eine entsprechende Fortsetzung des thermischen Netzes 10 (Wärmenetz) sind in der Figur durch drei aufeinanderfolgende Punkte angedeutet.

Das Wärmenetz 10 weist zur Versorgung der Wärmeverbraucher 2 und zur Einspeisung durch die Wärmeerzeuger 3 einen Vorlauf 11 und einen Rücklauf 12 für ein Wärmeträgermedium, typischerweise Wasser, auf. Das Wärmenetz 10 wird typischerweise durch Rohrleitungen, durch welches das Wärmeträgermedium mit einem bestimmten Massenstrom vom Vorlauf zum Rücklauf fließt, ausgebildet. Der Vorlauf 11 des Wärmenetzes 10 weist hierbei eine Vorlauftemperatur auf, die in Abgrenzung zu lokalen Vorlauftemperaturen der Wärmeverbraucher 2 und/oder Wärmeerzeuger 3 als globale Vorlauftemperatur bezeichnet wird. Der Rücklauf 12 des Wärmenetzes 10 weist eine Rücklauftemperatur auf, die entsprechend als globale Rücklauftemperatur bezeichnet wird.

Die lokalen Vorlauftemperaturen der Wärmeverbraucher 2 und/oder der Wärmeerzeuger 3 werden typischerweise durch ein lokales Wärmenetz der Wärmeverbraucher 2 beziehungsweise Wärmeerzeuger 3 ausgebildet. Mit anderen Worten umfassen die Wärmeverbraucher 2 und/oder die Wärmeerzeuger 3 jeweils ein lokales Wärmenetz mit einer jeweiligen zugehörigen lokalen Vorlauftemperatur. Die thermische Kopplung zwischen dem (globalen) Wärmenetz 10 und den genannten lokalen Wärmenetzen erfolgt typischerweise mittels Wärmetauschern.

Gemäß der Ausgestaltung der vorliegenden Erfindung ist die Steuerungsplattform 42 zur Steuerung des Wärmenetzes 10 ausgebildet. Insbesondere wird unter dem Begriff der Steuerung ein Einstellen der (globalen) Vorlauftemperatur des Wärmenetzes 10 und/oder ein Einstellen des Massenstromes des Wärmeträgermediums innerhalb des Wärmenetzes 10 verstanden. Die Steuerungsplattform 42 kann ein Bestandteil der zentralen Wärmeerzeugungsanlage 4 sein. In der Figur ist die Steuerungsplattform 42 nicht Bestandteil der zentralen Wärmeerzeugungsanlage 4.

Gemäß der Ausgestaltung der vorliegenden Erfindung ist die Steuerungsplattform 42 dazu ausgestaltet, von jedem der Wärmeverbraucher 2 und/oder von jedem der Wärmeerzeuger 3 eine Information über ihre jeweilige innerhalb eines Zeitbereiches, insbesondere innerhalb eines kommenden oder nächsten Zeitbereiches, erforderliche lokale Vorlauftemperatur zu empfangen. Mit anderen Worten übermitteln die Wärmeverbraucher 2 beziehungsweise die Wärmeerzeuger 3 die genannte Information, das heißt ihre vorgesehene (lokale) Vorlauftemperatur, an die Steuerungsplattform 42. Hierbei übermitteln die Wärmeverbraucher 2 eine minimale Vorlauftemperatur, die zur Deckung der jeweiligen Wärmelast ausreichend ist, und die Wärmeerzeuger 3 eine maximale Vorlauftemperatur der bereitstellbaren Wärmeleistung. Die Wärmeverbraucher 2 und/oder die Wärmerzeuger 3 können ihre vorgesehene Vorlauftemperatur durch ein jeweiliges Energiemanagementsystem und/oder durch Edge-Devices ermitteln und/oder übermitteln. Beispielsweise basierend auf einer durch diese berechneten Vorhersage bezüglich der innerhalb des Zeitbereiches erforderlichen Wärmeleistung beziehungsweise Wärmemenge.

In Abhängigkeit der empfangenen Informationen bezüglich der lokalen Vorlauftemperaturen wird das Wärmenetz 10 durch die Steuerungsplattform 42 gesteuert. Insbesondere wird die Vorlauftemperatur des Wärmenetzes 10 in Abhängigkeit der übermittelten lokalen erforderlichen Vorlauftemperaturen eingestellt. Hierbei ist eine Einstellung einer möglichst niedrigen Vorlauftemperatur bei gleichzeitiger Deckung des Bedarfs, welcher Bedarf der Steuerungsplattform 42 aufgrund der durch die Wärmeverbraucher 2 beziehungsweise Wärmeerzeuger 3 übermittelten Daten/Informationen bekannt ist, vorteilhaft. Mit anderen Worten erfolgt die Steuerung des Wärmenetzes 10 durch die Steuerungsplattform 42 bevorzugt derart, dass unter Berücksichtigung der erforderlichen lokalen Vorlauftemperaturen die globale Vorlauftemperatur minimiert wird. Die vorliegende Steuerungsplattform 42 ist bevorzugt für eine solche Steuerung ausgebildet.

Die Information beziehungsweise Daten bezüglich der lokalen Vorlauftemperaturen der Wärmeverbraucher 2 und/oder Wärmeerzeuger 3 können mittels eines Datennetzes 41, insbesondere über das Internet, beispielsweise cloudbasiert, an die Steuerungsplattform 42 übertragen werden. Dieser Datenaustausch beziehungsweise das zughörige Datennetz 41 ist vereinfacht durch die gestrichelten Linien in der Figur dargestellt. Weiterhin kann die Steuerungsplattform 42, insbesondere wenn sie nicht Bestandteil der zentralen Wärmeerzeugungsanlage 4 ist, mit der zentralen Wärmeerzeugungsanlage 4 zum Datenaustausch gekoppelt sein. In diesem Fall übermittelt die zentrale Wärmeerzeugungsanlage 4 insbesondere die globale Vorlauftemperatur und/oder globale Rücklauftemperatur des Wärmenetzes 10 an die Steuerungsplattform 42, die diese Information/Daten empfängt und bei der Steuerung des Wärmenetzes 10 berücksichtigt.

Das Wärmenetz 10 ist weiterhin bevorzugt als Nahwärmenetz, Fernwärmenetz, Fernkältenetz und/oder Anergienetz ausgebildet. Hierbei kann das Wärmenetz 10 mehrere der genannten verschiedenen Wärmenetze umfassen.

Die vorliegende Erfindung beziehungsweise eine ihrer Ausgestaltungen ermöglicht somit, insbesondere für ein Nahwärmenetz oder Fernwärmenetz, eine Koordination von mehreren Wärmeverbrauchern, insbesondere Wärmespeichern, und Wärmeerzeugern, wobei bei der genannten Koordination durch die Steuerungsplattform die jeweiligen lokalen Vorlauftemperaturen berücksichtigt werden.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1.: Wärmeaustauschsystem
- 2: Wärmeverbraucher/Wärmeerzeuger
- 3: Wärmeerzeuger
- 4: zentrale Wärmeerzeugungsanlage (KWK-Anlage)
- 10: Wärmenetz
- 11: Vorlauf
- 12: Rücklauf
- 41: Datenverbindung
- 42: Steuerungsplattform

## Patentansprüche

1. Steuerungsplattform (42) zur Steuerung eines Wärmenetzes (10), insbesondere eines Nahwärmenetzes und/oder Fernwärmenetzes, wobei mehrere Wärmeverbraucher (2) und Wärmeerzeuger (3) mit dem Wärmenetz (10) zum Wärmeaustausch gekoppelt sind, wobei die Steuerungsplattform (42) dazu ausgebildet ist, von
- jedem Wärmeverbraucher (2) eine Information über eine innerhalb eines Zeitbereiches minimal erforderliche lokale Vorlauftemperatur des Wärmeverbrauchers (2) zu empfangen;
- jedem Wärmeerzeuger (3) eine Information über eine innerhalb eines Zeitbereiches maximal bereitstellbare lokale Vorlauftemperatur des Wärmeerzeugers (3) zu empfangen; und
- in Abhängigkeit der empfangenen Informationen bezüglich der lokalen Vorlauftemperaturen eine globale Vorlauftemperatur und/oder globale Rücklauftemperatur des Wärmenetzes (10) einzustellen.

2. Steuerungsplattform (42) gemäß Anspruch 1, **dadurch gekennzeichnet, dass** die Steuerungsplattform (42) dazu ausgebildet ist, von jedem Wärmeverbraucher (2) und/oder Wärmeerzeuger (3) eine innerhalb des Zeitbereiches maximal verbrauchbare beziehungsweise bereitstellbare Wärmeleistung zu empfangen, wobei die empfangenen maximalen Wärmeleistungen bei der Steuerung des Wärmenetzes (10) durch die Steuerungsplattform (42) berücksichtigbar sind.

3. Steuerungsplattform (42) gemäß einem der vorhergehenden Ansprüche, **dadurch gekennzeichnet, dass** die Steuerungsplattform (42) dazu ausgebildet ist, von jedem Wärmeverbraucher (2) ein maximales Entgelt für einen Wärmeverbrauch innerhalb des Zeitbereiches zu empfangen, wobei die empfangenen maximalen Entgelte bei der Steuerung des Wärmenetzes (10) durch die Steuerungsplattform (42) berücksichtigbar sind.

4. Steuerungsplattform (42) gemäß einem der vorhergehenden Ansprüche, **dadurch gekennzeichnet, dass** die Steuerungsplattform (42) dazu ausgebildet ist, von jedem Wärmeerzeuger (3) ein minimales Entgelt für eine Wärmebereitstellung innerhalb des Zeitbereiches zu empfangen, wobei die empfangenen minimalen Entgelte bei der Steuerung des Wärmenetzes (10) durch die Steuerungsplattform (42) berücksichtigbar sind.

5. Steuerungsplattform (42) gemäß einem der vorhergehenden Ansprüche, **dadurch gekennzeichnet, dass** die Steuerungsplattform (42) dazu ausgebildet ist, den Wert der globalen Vorlauftemperatur mittels einer mathematischen Optimierung zu berechnen, wobei wenigstens die empfangenen lokalen Vorlauftemperaturen durch die Steuerungsplattform (42) bei der Optimierung berücksichtigbar sind.

6. Steuerungsplattform (42) gemäß einem der vorhergehenden Ansprüche, **dadurch gekennzeichnet, dass** die Steuerungsplattform (42) dazu ausgebildet ist, die globale Vorlauftemperatur des Wärmenetzes (10) im Bereich von 30 Grad Celsius bis 150 Grad Celsius einzustellen.

7. Steuerungsplattform (42) gemäß einem der vorhergehenden Ansprüche, **dadurch gekennzeichnet, dass** die Steuerungsplattform (42) dazu ausgebildet ist, eine Simulation des Betriebes des Wärmenetzes (10) basierend auf technischen Kenndaten von Rohrleitungen des Wärmenetzes (10) durchzuführen.

8. Steuerungsplattform (42) gemäß Anspruch 7, **dadurch gekennzeichnet, dass** die Steuerungsplattform (42) dazu ausgebildet ist, die Simulation basierend auf Verlustkoeffizienten und/oder maximalen Wärmeleistungen und/oder der Positionen der Wärmeverbraucher (2) innerhalb des Wärmenetzes (10) und/oder der Positionen der Wärmeerzeuger (3) innerhalb des Wärmenetzes (10) durchzuführen.

9. Verfahren zur Steuerung eines Wärmenetzes (10), insbesondere eines Nahwärmenetzes und/oder Fernwärmenetzes, mittels einer Steuerungsplattform (42), wobei mehrere Wärmeverbraucher (2) und Wärmeerzeuger (3) mit dem Wärmenetz (10) zum Wärmeaustausch gekoppelt sind, wobei durch die Steuerungsplattform (42), von
- jedem Wärmeverbraucher (2) eine Information über eine innerhalb eines Zeitbereiches minimal erforderliche lokale Vorlauftemperatur des Wärmeverbrauchers (2) empfangen wird;
- jedem Wärmeerzeuger (3) eine Information über eine innerhalb eines Zeitbereiches maximal bereitstellbare lokale Vorlauftemperatur des Wärmeerzeugers (3) empfangen wird; und
- in Abhängigkeit der empfangenen Informationen bezüglich der lokalen Vorlauftemperaturen eine globale Vorlauftemperatur und/oder globale Rücklauftemperatur des Wärmenetzes (10) eingestellt wird.

10. Verfahren gemäß Anspruch 9, **gekennzeichnet dadurch, dass** durch die Steuerungsplattform (42) von jedem Wärmeverbraucher (2) und/oder Wärmeerzeuger (3) eine innerhalb des Zeitbereiches maximal verbrauchbare beziehungsweise bereitstellbare Wärmeleistung empfangen wird, wobei die empfangenen maximalen Wärmeleistungen bei der Steuerung des Wärmenetzes (10) durch die Steuerungsplattform (42) berücksichtigt werden.

11. Wärmeaustauschsystem (1), **dadurch gekennzeichnet, dass** das Wärmeaustauschsystem (1) eine Steuerungsplattform (42) nach Anspruch 1 und ein Wärmenetz (10) umfasst, und die Steuerungsplattform (42) zur Steuerung des Wärmenetzes (10) ausgebildet ist, wobei mehrere Wärmeverbraucher (2) und Wärmeerzeuger (3) mit dem Wärmenetz (10) zum Wärmeaustausch gekoppelt sind.

12. Wärmeaustauschsystem (1) gemäß Anspruch 11, **dadurch gekennzeichnet, dass** das Wärmenetz (10) als Nahwärmenetz, Fernwärmenetz, Fernkältenetz und/oder Anergienetz ausgebildet ist.

13. Wärmeaustauschsystem (1) gemäß Anspruch 11 oder 12, **dadurch gekennzeichnet, dass** das Wärmeaustauschsystem (1) die Wärmeverbraucher (2) und die Wärmeerzeuger (3) umfasst.

## Claims

1. Control platform (42) for controlling a heat network (10), in particular a community heat network and/or district heat network, wherein a plurality of heat consumers (2) and heat generators (3) are coupled to the heat network (10) for the purpose of heat exchange, wherein the control platform (42) is designed to
- receive from each heat consumer (2) information about a local feed temperature of the heat consumer (2) required as a minimum within a time interval;
- receive from each heat generator (3) information about a local feed temperature of the heat generator (3) that can be provided as a maximum within a time interval; and
- adjust a global feed temperature and/or global return temperature of the heat network (10) depending on the information received about the local feed temperatures.

2. Control platform (42) according to Claim 1, **characterized in that** the control platform (42) is designed to receive from each heat consumer (2) and/or heat generator (3) a heating power that can be consumed, or respectively provided, as a maximum within the time interval, wherein the control platform (42) can take the received maximum heating powers into account in controlling the heat network (10).

3. Control platform (42) according to either of the preceding claims, **characterized in that** the control platform (42) is designed to receive from each heat consumer (2) a maximum remuneration for a heat consumption within the time interval, wherein the control platform (42) can take the received maximum remunerations into account in controlling the heat network (10).

4. Control platform (42) according to any of the preceding claims, **characterized in that** the control platform (42) is designed to receive from each heat generator (3) a minimum remuneration for heat provision within the time interval, wherein the control platform (42) can take the received minimum remunerations into account in controlling the heat network (10).

5. Control platform (42) according to any of the preceding claims, **characterized in that** the control platform (42) is designed to calculate the value of the global feed temperature by means of mathematical optimization, wherein the control platform (42) can take at least the received local feed temperatures into account in the optimization.

6. Control platform (42) according to any of the preceding claims, **characterized in that** the control platform (42) is designed to adjust the global feed temperature of the heat network (10) in the range of from 30 degrees Celsius to 150 degrees Celsius.

7. Control platform (42) according to any of the preceding claims, **characterized in that** the control platform (42) is designed to perform a simulation of the operation of the heat network (10) on the basis of technical characteristic data of pipelines of the heat network (10).

8. Control platform (42) according to Claim 7, **characterized in that** the control platform (42) is designed to perform the simulation on the basis of loss coefficients and/or maximum heating powers and/or the positions of the heat consumers (2) within the heat network (10) and/or the positions of the heat generators (3) within the heat network (10).

9. Method for controlling a heat network (10), in particular a community heat network and/or district heat network, by means of a control platform (42), wherein a plurality of heat consumers (2) and heat generators (3) are coupled to the heat network (10) for the purpose of heat exchange, wherein the control platform (42)
- receives from each heat consumer (2) information about a local feed temperature of the heat consumer (2) required as a minimum within a time interval;
- receives from each heat generator (3) information about a local feed temperature of the heat generator (3) that can be provided as a maximum within a time interval; and
- adjusts a global feed temperature and/or global return temperature of the heat network (10) depending on the information received about the local feed temperatures.

10. Method according to Claim 9, **characterized in that** the control platform (42) receives from each heat consumer (2) and/or heat generator (3) a heating power that can be consumed, or respectively provided, as a maximum within the time interval, wherein the control platform (42) can take the received maximum heating powers into account in controlling the heat network (10).

11. Heat exchange system (1), **characterized in that** the heat exchange system (1) comprises a control platform (42) according to Claim 1 and a heat network (10), and the control platform (42) is designed to control the heat network (10), wherein a plurality of heat consumers (2) and heat generators (3) are coupled to the heat network (10) for the purpose of heat exchange.

12. Heat exchange system (1) according to Claim 11, **characterized in that** the heat network (10) is in the form of a community heat network, district heat network, district cooling network and/or anergy network.

13. Heat exchange system (1) according to Claim 11 or Claim 12, **characterized in that** the heat exchange system (1) comprises the heat consumers (2) and the heat generators (3).

## Revendications

1. Plateforme (42) de commande pour la commande d'un réseau (10) de chaleur, en particulier d'un réseau de chaleur proche et/ou d'un réseau de chaleur à grande distance, dans laquelle plusieurs consommateurs (2) de chaleur et producteurs (3) de chaleur sont, pour l'échange de chaleur, reliés au réseau (10) de chaleur, dans laquelle la plateforme (42) de commande est constituée pour
- recevoir de chaque consommateur (2) de chaleur une information sur une température locale d'admission du consommateur (2) de chaleur nécessaire au minimum dans un laps de temps ;
- recevoir de chaque producteur (3) de chaleur une information sur une température locale d'admission du producteur (3) de chaleur pouvant être mise à disposition au maximum pendant un laps de temps ; et
- régler en fonction des informations reçues concernant les températures locales d'admission une température globale d'admission et/ou une température globale de retour du réseau (10) de chaleur.

2. Plateforme (42) de commande suivant la revendication 1, **caractérisée en ce que** la plateforme (42) de commande est constituée pour recevoir de chaque consommateur (2) de chaleur et/ou de chaque producteur (3) de chaleur une puissance calorifique pouvant être utilisée respectivement, pouvant être mise à disposition au maximum dans le laps de temps, dans laquelle les puissances calorifiques maximum reçues peuvent être prises en compte par la plateforme (42) de commande, lors de la commande du réseau (10) de chaleur.

3. Plateforme (42) de commande suivant l'une des revendications précédentes, **caractérisée en ce que** la plateforme (42) de commande est constituée, pour recevoir de chaque consommateur (2) de chaleur un dédommagement maximum pour une consommation de chaleur dans le laps de temps, dans laquelle les dédommagements maximum reçus peuvent être pris en compte par la plateforme (42) de commande lors de la commande du réseau (10) de chaleur.

4. Plateforme (42) de commande suivant l'une des revendications précédentes, **caractérisée en ce que** la plateforme (42) de commande est constituée, pour recevoir de chaque producteur (3) de chaleur un dédommagement minimum pour une mise à disposition de chaleur dans le laps de temps, dans laquelle les dédommagements minimum reçus peuvent être pris en compte par la plateforme (42) de commande lors de la commande du réseau (10) de chaleur.

5. Plateforme (42) de commande suivant l'une des revendications précédentes, **caractérisée en ce que** la plateforme (42) de commande est constituée, pour calculer la valeur de la température globale d'admission au moyen d'une optimisation mathématique, dans laquelle au moins les températures locales d'admission reçues peuvent être prises en compte par la plateforme de commande (42) lors de l'optimisation.

6. Plateforme (42) de commande suivant l'une des revendications précédentes, **caractérisée en ce que** la plateforme (42) de commande est constituée, pour régler la température globale d'admission du réseau (10) de chaleur dans la plage de 30 degrés Celsius à 150 degrés Celsius.

7. Plateforme (42) de commande suivant l'une des revendications précédentes, **caractérisée en ce que** la plateforme (42) de commande est constituée, pour effectuer une simulation du fonctionnement du réseau (10) de chaleur sur la base de données techniques caractéristiques de canalisations du réseau (10) de chaleur.

8. Plateforme (42) de commande suivant la revendication 7, **caractérisée en ce que** la plateforme (42) de commande est constituée, pour effectuer la simulation sur la base de coefficients de perte et/ou de puissances calorifiques maximum et/ou des positions des consommateurs (2) de chaleur dans le réseau (10) de chaleur et/ou des positions des producteurs (3) de chaleur dans le réseau (10) de chaleur.

9. Procédé de commande d'un réseau (10) de chaleur, en particulier d'un réseau de chaleur proche et/ou d'un réseau de chaleur à grande distance, au moyen d'une plateforme (42) de commande, dans lequel plusieurs consommateurs (2) de chaleur et producteurs (3) de chaleur sont, pour l'échange de chaleur, reliés au réseau (10) de chaleur, dans lequel
par la plateforme (42) de commande,
- il est reçu de chaque consommateur (2) de chaleur une information sur une température locale d'admission du consommateur (2) de chaleur nécessaire au minimum dans un laps de temps ;
- il est reçu de chaque producteur (3) de chaleur une information sur une température locale d'admission du producteur (3) de chaleur pouvant être mise à disposition au maximum pendant un laps de temps ; et
- on règle, en fonction des informations reçues concernant les températures locales d'admission, une température globale d'admission et/ou une température globale de retour du réseau (10) de chaleur.

10. Procédé suivant la revendication 9, **caractérisé en ce qu'**il est reçu par la plateforme (42) de commande de chaque consommateur (2) de chaleur et/ou de chaque producteur (3) de chaleur, une puissance calorifique pouvant être consommée et respectivement pouvant être mise à disposition au maximum dans le laps de temps, dans lequel les puissances calorifiques maximum reçues sont prises en compte lors de la commande du réseau (10) de chaleur par la plateforme (42) de commande.

11. Système (1) d'échange de chaleur, **caractérisé en ce que** le système (1) d'échange de chaleur comprend une plateforme (42) de commande suivant la revendication 1 et un réseau (10) de chaleur et la plateforme (42) de commande est constituée pour la commande du réseau (10) de chaleur, dans lequel plusieurs consommateurs (2) de chaleur et producteurs (3) de chaleur sont, pour l'échange de chaleur, reliés au réseau (10) de chaleur.

12. Système (1) d'échange de chaleur suivant la revendication 11, **caractérisé en ce que** le réseau (10) de chaleur est constitué sous la forme d'un réseau de chaleur proche, d'un réseau de chaleur à grande distance, d'un réseau de froid à grande distance et/ou d'un réseau d'anergie.

13. Système (1) d'échange de chaleur suivant la revendication 11 ou 12, **caractérisé en ce que** le système (1) d'échange de chaleur comprend les consommateurs (2) de chaleur et les producteurs (3) de chaleur.
